# EUROPÄISCHE PATENTSCHRIFT

(11) **EP 1 239 177 B1**
(45) Veröffentlichungstag und Bekanntmachung des Hinweises auf die Patenterteilung: **10.09.2003**
(21) Anmeldenummer: 01129363.6
(22) Anmeldetag: 17.12.2001
(51) Int. Cl.: F16D 27/00, F16D 29/00

(54) **Stelleinrichtung**
Actuator device
Dispositif de positionnement

(30) Priorität: 28.02.2001 DE 10109469
(43) Veröffentlichungstag der Anmeldung: 11.09.2002
(73) Patentinhaber: ZF Sachs AG, 97424 Schweinfurt (DE)
(72) Erfinder: Ratte, Andreas, Dipl.-Ing., 97456 Dittelbrunn (DE); Wirth, Thomas, Dipl.-Ing., 97523 Schwanfeld (DE); Horst, Alexander, 97422 Schweinfurt (DE); Leimbach, Lutz, Dipl.-Ing., 97422 Schweinfurt (DE)
(74) Vertreter: Ruttensperger, Bernhard, Dipl.-Phys.

(56) Entgegenhaltungen:
- WO-A-00/63574
- US-A- 1 907 171
- US-A- 3 173 526
- US-A- 4 520 910
- US-A- 5 507 373

## Beschreibung

Die vorliegende Erfindung betrifft eine Stelleinrichtung, insbesondere zur Betätigung einer Reibungskupplung, umfassend wenigstens zwei Stellantriebe, ein Abtriebsglied, eine Bewegungsumsetzanordnung, durch welche eine Antriebskraft der wenigstens zwei Stellantriebe in eine Stellkraft des Abtriebsorgans umsetzbar ist, sowie eine Ansteuervorrichtung zur Ansteuerung der wenigstens zwei Stellantriebe.

Stelleinrichtungen, welche zur Betätigung von Reibungskupplungen in Kraftfahrzeugen eingesetzt werden, werden im Allgemeinen derart aufgebaut, dass sie für den speziellen Einsatzzweck, d.h. für eine spezielle Kupplung, ausgelegt sind. Dies bedeutet jedoch, dass dann, wenn Anpassungsmaßnahmen im Bereich der Kupplung vorgenommen werden, um diese beispielsweise in Verbindung mit einem anderen Antriebsaggregat einsetzen zu können, in entsprechender Weise Anpassungsmaßnahmen bei der Stelleinrichtung vorgenommen werden müssen. Vor allem die Tendenz, Antriebsaggregate mit immer höheren Ausgangsdrehmomenten aufzubauen, erfordert entsprechend stärkere Kraftspeicher in den Reibungskupplungen mit der Folge, dass die in den Stelleinrichtungen eingesetzten Stellantriebe, welche im Allgemeinen Elektromotoren sind, nicht mehr die erforderliche Kraft aufbringen können, um diese Kupplungen ausrücken zu können. Der Einsatz größerer oder stärkerer Motoren als Stellantriebe hat jedoch im Allgemeinen den Nachteil, dass derartige größere Motoren vergleichsweise schlechte dynamische Eigenschaften haben, d.h. oftmals nicht in der Lage sind, die zur Durchführung von Ein- und Auskuppelvorgängen erforderlichen schnellen Stellbewegungen erzeugen zu können.

Aus der DE 197 23 362 A1 ist eine Stelleinrichtung zur Betätigung einer Kraftfahrzeugsreibungskupplung bekannt. Ein als Stößel ausgebildetes Abtriebsglied dieser bekannten Stelleinrichtung wirkt auf einen Ausrückermechnismus ein, um die Reibungskupplung zwischen einer Einkuppelstellung und einer Auskuppelstellung zu verstellen. Diese bekannte Stelleinrichtung weist zwei Antriebsmotoren auf. Ein erster dieser Antriebsmotoren dient dazu, den normalen Kupplungsverstellbetrieb durchzuführen. Der zweite Antriebsmotor ist dazu vorgesehen, im Notfall, also dann, wenn der erste Antriebsmotor ausfällt und eine weitere Verstellung der Kupplung ansonsten nicht mehr möglich wäre, aktiviert zu werden, um zumindest noch einen Notbetrieb der Kupplung zu ermöglichen. Da dieser zweite Stellantrieb lediglich als Sicherheitsmaßnahme bereitgestellt ist und nicht dazu vorgesehen ist, über längere Zeit hinweg einen normalen Kupplungsbetrieb aufrecht zu erhalten, ist er leistungsschwächer ausgebildet als derjenige Motor, welcher normalerweise zur Verstellung der Kupplung erregt wird.

WO 00/63579 offenbart eine Stelleinrichtung nach den Obergriff der Ansprüche 1 und 2, wobei zwei Aktuatoren auf Gebenzylinder einwirken.

Es ist die Aufgabe der vorliegenden Erfindung, eine Stelleinrichtung vorzusehen, welche in einfacher Art und Weise an spezielle Einsatzzwecke angepasst werden kann und die erforderlichen Stellbewegungen erzeugen kann.

Erfindungsgmäß wird diese Aufgabe gelöst durch die Stelleinrichtungen nach den Ansprüchen 1 und 2.

Durch den Einsatz wenigstens zweier Stellantriebe zum Erzeugen der Stellbewegungen ist es möglich, vergleichsweise schwache Stellantriebe zu verwenden, die zusammen jedoch in der Lage sind, auch die bei vergleichsweise bei starken Kraftspeichern in Reibungskupplungen erforderlichen Ausrückkräfte zu erzeugen.

Alternativ ist es möglich, dass die Antriebskräfte der wenigstens zwei Stellantriebe seriell auf wenigstens ein Bewegungsumsetzglied der Bewegungsumsetzanordnung übertragen werden. Während bei der parallelen Anordnung der Stellantriebe nach Anspruch 1 letztendlich sich die einzelnen Betätigungskräfte bzw. Betätigungsmomente der verschiedenen Stellantriebe addieren, bedeutet eine serielle Anordnung im Sinne der vorliegenden Erfindung, dass die Antriebsbewegungen bzw. Antriebswege der verschiedenen Stellantriebe sich addieren. Durch die gleichzeitige Erregung zweier oder mehrerer Stellantriebe ist es somit möglich, in vergleichsweise kurzer Zeit große Stellwege zu erzeugen, mit der Folge, dass sehr schnelle Stellvorgänge erhalten werden können.

Bei einer alternativen Ausgestaltung kann die serielle Anordnung bzw. Wirkungsweise mehrerer Stellantriebe dadurch erhalten werden, dass ein erster der Stellantriebe mit einem Bewegungsumsetzglied der Bewegungsumsetzanördnung in Antriebsverbindung steht und dass der erste der Stellantriebe durch einen zweiten der Stellantriebe bewegbar ist.

Auch bei serieller Anordnung bzw. Wirkungsweise der verschiedenen Stellantriebe kann vorgesehen sein, dass das Bewegungsumsetzglied um eine Drehachse drehbar ist und einen Verzahnungsbereich aufweist, mit welchem ein Verzahnungsbereich des ersten der Stellantriebe in Kämmeingriff steht. Die Addition der verschiedenen Antriebsbewegungen der Stellantriebe kann dabei gemäß einer ersten Ausgestaltungsvariante dadurch erhalten werden, dass das Trageelement um eine Drehachse, vorzugsweise die Drehachse des Bewegungsumsetzgliedes, drehbar ist und einen Verzahnungsbereich aufweist, mit welchem ein Verzahnungsbereich des zweiten der Stellantriebe in Kämmeingriff steht. Alternativ ist es möglich, dass ein Gehäuse des ersten der Stellantriebe, bezüglich welchem Gehäuse der Verzahnungsbereich des ersten der Stellantriebe drehbar ist, durch den zweiten der Stellantriebe zur Drehung antreibbar ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Draufsicht auf eine erfindungsgemäße Stelleinrichtung bei geöffnetem Gehäuse;
- Fig. 2: eine blockbildartige Darstellung, welche den prinzipiellen Aufbau der Stelleinrichtung gemäß Fig. 1 veranschaulicht;
- Fig. 3: eine Prinzipdarstellung, welche die Zusammenwirkung der Stellantriebe der Stelleinrichtung gemäß Fig. 1 mit einem Segmentzahnrad veranschaulicht;
- Fig. 4: eine Abwandlung der in Fig. 1 erkennbaren Stelleinrichtung in teilweise geschnittener Darstellung;
- Fig. 5: eine der Fig. 4 entsprechende Ansicht einer weiteren abgewandelten Ausgestaltungsform;
- Fig. 6: eine der Fig. 4 entsprechende Ansicht einer weiteren abgewandelten Ausgestaltungsform;
- Fig. 7: eine Blockbilddarstellung, welche einen abgewandelten prinzipiellen Aufbau der erfindungsgemäßen Stelleinrichtung darstellt;
- Fig. 8: eine Prinzip-Seitenansicht einer erfindungsgemäßen Stelleinrichtung mit serieller Wirkungsweise der Stellantriebe;
- Fig. 9: eine der Fig. 8 entsprechende Ansicht einer alternativen Ausgestaltungsvariante mit serieller Wirkungsweise der Stellantriebe.

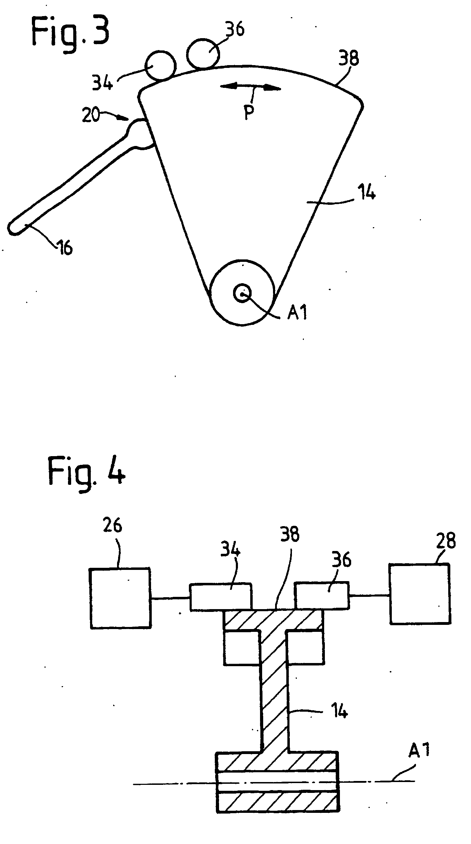

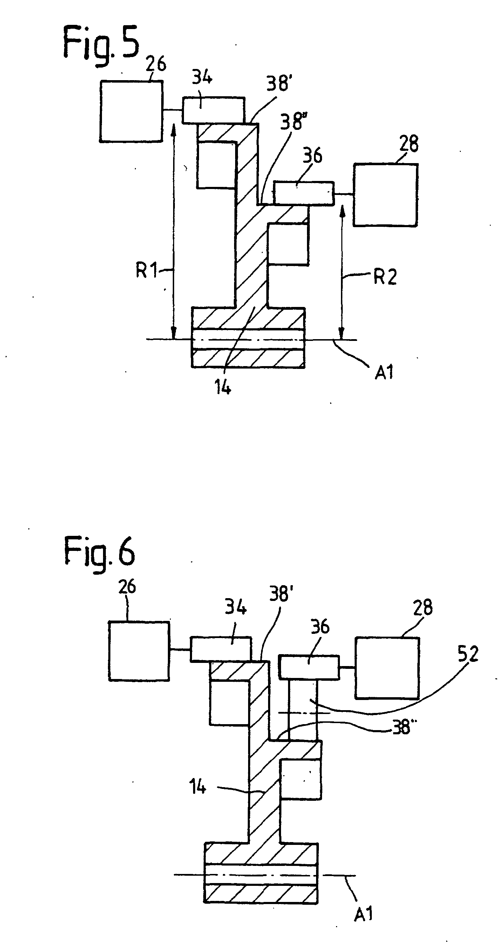

Die in Fig 3 und 4 dargestellten Varianten sind nicht gemäß der Erfindung.

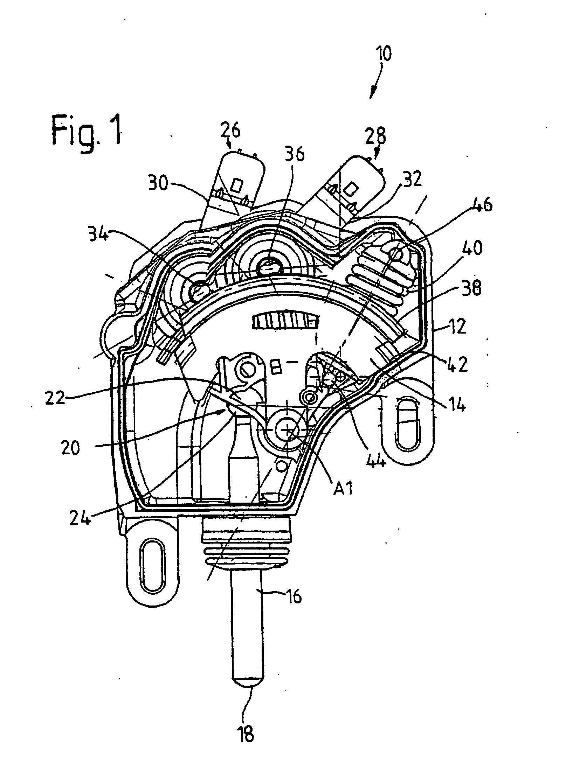

Die Fig. 1 zeigt eine erste Ausgestaltungsvariante einer erfindungsgemäßen Stelleinrichtung 10, wie sie Einsatz findet oder finden kann zur Betätigung von Reibungskupplungen. Die Stelleinrichtung 10 umfasst eine Gehäuseanordnung 12, in welcher ein allgemein mit 14 bezeichnetes Segmentzahnrad um eine Drehachse A1 schwenkbar getragen ist. Das Segmentzahnrad 14 steht in Eingriff mit einem als Abtriebsglied wirkenden Stößel 16. Dieser Stößel 16 kann mit seinem freien Endbereich 18 einen Ausrückhebel beaufschlagen oder kann beispielsweise auch einen Geberzylinder beaufschlagen, so dass die Betätigungskraft über ein Hydrauliksystem auf einen Nehmerzylinder und von diesem auf die Kupplung geleitet werden kann. Um die Drehbewegung des Segmentzahnrads 14 um die Achse A1 in eine Verschiebebewegung des Stößel 16 im Wesentlichen in seiner Längsrichtung umsetzen zu können wirkt im Verbindungsbereich zwischen Stößel 16 und Segmentzahnrad 14 eine Gelenkanordnung 20, welche beispielsweise nach Art eines Kugelgelenks ausgebildet sein kann mit einer Gelenkpfanne 22 am Segmentzahnrad 14 und einer Gelenkkugel 24 am Stößel 16.

Die in Fig. 1 dargestellte Stelleinrichtung 10 umfasst zwei Stellantriebe 26, 28. Jeder dieser Stellantriebe 26, 28 weist einen Elektromotor 30, 32 auf, dessen Ausgangswelle ggf. über einen Getriebemechanismus ein jeweiliges Zahnrad oder Schneckenrad 34, 36 antreibt. Diese Zahnräder oder Schneckenräder 34, 36 stehen bezüglich der Drehachse A1 an verschiedenen Umfangspositionen in Kämmeingriff mit einer Verzahnung 38 des Segmentzahnrads 14.

Die Stelleinrichtung 10, wie sie in Fig. 1 dargestellt ist, umfasst ferner eine Kompensationsfeder 40. Diese ist an der Gehäuseanordnung 12 einerseits und an dem Segmentzahnrad 14 andererseits unter Vorspannung abgestützt. In der in Fig. 1 dargestellten zurückgezogenen Positionierung des Stößels 16, in welcher auch das Segmentzahnrad 14 in Anlage an einem Drehwegbegrenzungsabschnitt 42 der Gehäuseanordnung 12 ist, ist eine Übertotpunktstellung erhalten, bei welcher der Abstützpunkt 44, an welchem die Kompensationsfeder 40 das Segmentzahnrad 14 beaufschlagt, bezüglich einer die Drehachse A1 und den Abstützpunkt 46 verbindenden Linie, an welchem Abstützpunkt 46 die Kompensationsfeder 40 die Gehäuseanordnung 12 beaufschlagt, in Richtung auf den Drehwegbegrenzungsanschlag 42 zu versetzt ist. Durch die Kompensationsfeder 40 ist somit das Segmentzahnrad 14 in die in Figur 1 dargestellte Endstellung vorgespannt.

Werden die beiden Stellantriebe 26, 28 bzw. die Elektromotoren 30, 32 derselben durch eine nicht dargestellte Ansteuervorrichtung erregt, und zwar derart, dass auf das Segmentzahnrad 14 ein dieses aus seiner in Fig. 1 erkennbaren Endstellung heraus drehendes Drehmoment erzeugt wird, so wird zunächst kurzzeitig noch die Kompensationsfeder 40 weitergespannt, nämlich so lange, bis der Abstützpunkt 40 die angesprochene Verbindungslinie zwischen dem Abstützpunkt 46 und der Drehachse A1 erreicht hat. Danach kann bei anhaltender Drehbewegung des Segmentzahnrads 14 um die Drehachse A1 die Kompensationsfeder 40 sich entspannen und liefert somit einen Beitrag zur Betätigungskraft. Durch geeignete Abstimmung der verschiedenen Hebelverhältisse und der Federkonstante der Kompensationsfeder 40 auf eine zu betätigende Kupplung karin idealerweise ein Zustand erhalten werden, bei welchem die durch die Kompensationsfeder 40 gelieferte Kraft im Wesentlichen vollständig die in der Kupplung aufzubringende Ausrückkraft bereitstellt bzw. die durch den in der Kupplung vorhandenen Kraftspeicher aufgebrachte Beaufschlagungskraft kompensiert. Die Motoren 30, 32 müssten dann lediglich zur Überwindung der Reibkräfte bzw. von Massenträgheitsmomenten erregt werden. Gleichwohl werden im Allgemeinen auch die Elektromotoren 30, 32 einen wesentlichen Beitrag zur Ausrückkraft liefern.

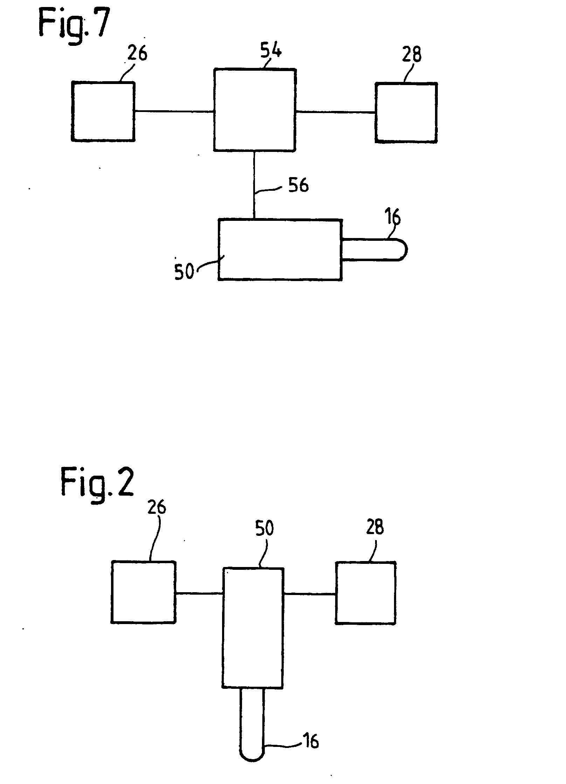

Der wesentliche prinzipielle Aufbau der erfindungsgemäßen Stelleinrichtung 10 ist in Fig. 2 noch einmal veranschaulicht. Man erkennt dort den Stößel 16, welcher aus einem im Wesentlichen in der Gehäuseanordnung 12 untergebrachten Aktuatorteil 50 hervorsteht. Dieser Aktuatorteil 50 umfasst beispielsweise das Segmentzahnrad 14 und die Kompensationsfeder 40, welche in Fig. 1 erkennbar sind. Die beiden Stellantriebe 26, 28 leiten ihre bei Erregung derselben jeweils erzeugten Antriebs- oder Stellkräfte parallel in den Aktuatorteil 50 ein und Versetzen diesen in Betrieb, um die gewünschten Stellbewegungen des Stößels 16 zu erzeugen.

Durch den Einsatz zweier Stellantriebe 26, 28 ist es möglich, diese vergleichsweise schwach zu dimensionieren und dennoch damit Kupplungen zu betätigen, in welchen vergleichsweise große Ausrückkräfte erforderlich sind. Es wird somit der Nachteil vermieden, dass ein einziger relativ massiver Stellantrieb mit entsprechend geringer Stelldynamik verwendet werden muss.

Es sei darauf hingewiesen, dass bei der in Figur 1 erkennbaren Ausgestaltungsvariante die beiden Stellantriebe, so wie auch in Fig. 3 noch einmal veranschaulicht, letztendlich von derselben Seite her mit ihren Zahnrädern oder Schneckenrädern 34, 36 auf das Segmentzahrad 14 einwirken, um dieses in der Richtung eines Pfeils P um die Drehachse A1 zu verschwenken. Selbstverständlich ist es ebenso möglich, so wie in Fig. 2 dargestellt und auch in der Schnittdarstellung der Fig. 4 erkennbar, die beiden Stellantriebe 26, 28 von bezüglich der Drehachse A1 unterschiedlichen axialen Seiten her auf das Segmentzahnrad 14 bzw. die Verzahnung 38 desselben einwirken zu lassen.

Während bei den in den Fig. 1 - 4 dargestellten Varianten die beiden Stellantriebe 26, 28 mit ihren jeweiligen Zahnrädern oder Schneckenrädern 34, 36 auf letztendlich dieselbe Verzahnung 38 des Segmentzahnrads 14 einwirken und somit für beide Stellantriebe 26, 28 im Wesentlichen gleiche Hebelverhältnisse vorhanden sind, zeigt die Fig. 5 eine Variante, bei welcher für die beiden Stellantriebe 26, 28 bzw. deren Schnecken- oder Zahnräder 34, 36 verschiedene Verzahnungsbereiche 38', 38" an den verschiedenen axialen Seiten des Segmentzahrads 14 vorgesehen sind, wobei diese verschiedenen Verzahnungsbereiche 38', 38" verschiedene Radialabstände R1, R2 zur Drehachse aufweisen. Dies bedeutet letztendlich, dass die Stellantriebe 26, 28 mit unterschiedlichen Hebelverhältnissen auf das Segmentzahnrad 14 einwirken und somit verschiedene Momentenbeiträge für das insgesamt auf das Segmentzahnrad 14 übertragene Antriebsdrehmoment liefern. Wenn dann beispielsweise auch nöch verschieden stark dimensionierte Elektromotoren in den Stellantrieben 26, 28 eingesetzt werden, kann hier eine optimale Anpassung der Stelleinrichtung 10 an eine zu betätigende Reibungskupplung erhalten werden.

Die Fig. 6 zeigt eine abgeänderte Ausgestaltungsvariante, bei welcher zwischen einem der Stellantriebe 26, 28, nämlich dem Stellantrieb 28, welcher auf den Verzahnungsbereich 38" einwirkt, und dem Segmentzahnrad eine Getriebeanordnung in Form eines Zahnrades 52 vorgesehen, wodurch letztendlich auch eine Anpassung im Bereich der Kraftübertragungsverhältnisse vorgenommen werden kann.

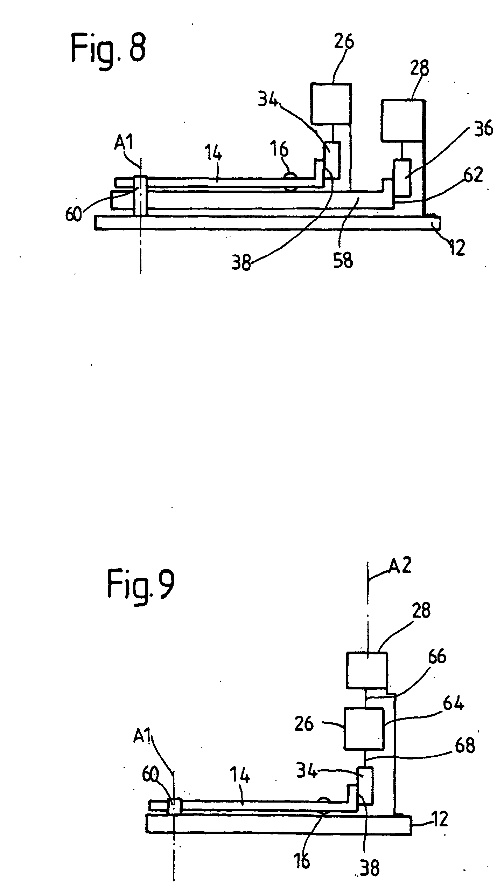

In Fig. 7 ist eine Ausgestaltungsvariante dargestellt, bei welcher die beiden Stellantriebe 26, 28 nicht direkt in Antriebsverbindung mit dem Aktuatorteil 50 stehen, sondern zunächst mit einer Getriebeanordnung 54 in AntriebsVerbindung stehen, welche über ihr Ausgangsglied 56 letztendlich in Antriebsverbindung mit dem Aktuatorteil 50 steht. Dieses Ausgangsglied 56 kann beispielsweise wiederum ein Zahnrad oder Schneckenrad tragen, das mit dem in Fig. 7 nicht erkennbaren Segmentzahnrad in Kämmeingriff steht. Hier kann letztendlich ein herkömmlicher Aktuatorteil 50, welcher zum Einsatz nur eines einzigen Stellantriebs ausgebildet ist, Anwendung finden.

Bei den mit Bezug auf die Figuren 1 bis 7 vorangehend beschriebenen Ausgestaltungsformen wirken die beiden Stellantriebe 26, 28 zueinander parallel, d.h. im Kraftfluss addieren sich die Antriebskräfte dieser beiden Stellantriebe 26, 28 mit der Folge, dass ein entsprechend großes Antriebsdrehmoment auf das Segmentzahnrad 14 übertagen werden kann. Mit Bezug auf die Figuren 8 und 9 werden nachfolgend Ausgestaltungsvarianten beschrieben, bei welchen die vorhandenen Stellantriebe derart wirken, dass sich ihre Stellbewegungen bzw. die durch diese erzeugten Stellwege addieren. Komponenten, welche vorangehend bereits beschriebenen Komponenten hinsichtlich Aufbau bzw. hinsichtlich Funktion entsprechen, sind mit dem gleichen Bezugszeichen unter Hinzufügung eines Anhangs "a" bezeichnet.

Die Fig. 8 zeigt eine skizzenhaft dargestellte Variante, bei welcher zusätzlich zu dem als Bewegungsumsetzglied 14 wirkenden Segmentzahnrad 14 ein Trageelement 58 in der nur schematisch angedeuteten Gehäuseanordnung 12 um die Drehachse A 1 drehbar getragen ist. Beispielsweise kann an der Gehäuseanordnung 12 ein Lagerzapfen 60 vorgesehen sein, auf welchem sowohl das Segmentzahnrad 14 als auch das Trageelement 58 schwenkbar getragen ist. Selbstverständlich könnte auch an dem Trageelement 58 ein entsprechender Lagerzapfen für das Segmentzahnrad 14 vorgesehen sein und an der Gehäuseanordnung 12 dann ein Lagerzapfen für die das Segmentzahnrad 14 und das Trageelement 58 umfassende Baugruppe vorgesehen sein. An dem Trageelement 58 ist der Stellantrieb 26 getragen, so dass dieser über sein mit der Verzahnung 38 des Segmentzahnrads 14 in Kämmeingriff stehendes Schnecken- oder Zahnrad 34 das Segmentzahnrad 14 zur Drehbewegung bezüglich des Trageelements 58 antreiben kann.

In der in Fig. 8 dargestellten Ausgestaltungsvariante ist auch das Trageelement 58 als Segmentzahnrad ausgebildet und weist in seinem Außenumfangsbereich eine Verzahnung 62 auf. Mit dieser steht das Schneckenoder Zahnrad 36 des zweiten Stellantriebs 28 in Kämmeingriff. Dieser zweite Stellantrieb 28 ist nunmehr bezüglich der Gehäuseanordnung 12 getragen, so dass bei Erregung des Elektromotors des Stellantriebs 28 das Trageelement 58 mit allen daran getragenen Komponenten und auch das Segmentzahnrad 14 zur Drehung um die Drehachse A1 angetrieben wird.

Werden also zur Erzeugung einer Stellbewegung die beiden Stellantriebe 26, 28 entsprechend angesteuert, so addieren sich letztendlich die Schwenkwinkel des Segmentzahnrads 14 und des Trageelements 58 um die Drehachse A1. Infolgedessen wird in einer vergleichsweise kurzen Zeit ein großer Stellhub des Stößels 16 erhalten, wobei letztendlich jedoch keine Verringerung des durch jeden der Stellantriebe 26, 28 erzeugten Antriebsdrehmomentes beispielsweise durch entsprechende Änderung der Hebelverhältnisse erzeugt wird.

Bei der in Fig. 9 dargestellten Ausgestaltungsvariante steht der Stellantrieb 26 über sein Schneckenrad oder Zahnrad 34 wieder in Antriebsverbindung mit dem Segmentzahnrad 14. Ein Gehäuse 64 des Stellantriebs 26 kann nunmehr jedoch durch den zweiten Stellantrieb 28 zur Drehung angetrieben werden. Hier kann beispielsweise die Anordnung derart sein, dass eine Ausgangswelle 66 des Stellantriebs 28 und eine Ausgangswelle 68 des Stellantriebs 26 um eine gemeinsame Drehachse A2 drehbar sind, wobei dann das Gehäuse 64 des Stellantriebs 26 an der Ausgangswelle 66 des Stellantriebs 28 getragen ist. Selbstverständlich ist es auch möglich, über einen entsprechenden Getriebemechanismus durch den Stellantrieb 28 das Gehäuse des Stellantriebs 26 zur Drehung um die Drehachse A2 anzutreiben. Auch hier gilt letztendlich wieder das gleiche Prinzip, dass bei Erregung beider Stellantriebe 26, 28 die durch diese jeweils erzeugten Dreh-Antriebsbewegungen überlagert bzw. addiert werden, so dass ohne Verringerung des durch jeden der Stellantriebe erzeugten Antriebsdrehmomentes das Segmentzahnrad 14 in kurzer Zeit um einen vergleichsweise großen Schwenkwinkel um die Drehachse A1 verschwenkt werden kann.

Bei dieser seriellen Wirkungsweise der beiden Stellantriebe können zur Erlangung größerer Betätigungskräfte nunmehr auch größer gebaute Stellantriebe bzw. Elektromotoren für diese eingesetzt werden. Der Nachteil der geringeren Dynamik dieser größeren Stellantriebe wird durch die Überlagerung der Stellbewegungen der beiden Stellantriebe kompensiert.

Bei allen vorangehend beschriebenen Ausgestaltungsvarianten eines erfindungsgemäßen Stellantriebs wird in vorteilhafter Weise ausgenutzt, dass zumindest zwei Stellantriebe bzw. Antriebsmotoren derselben bei Durchführung von Stellbewegungen gleichzeitig wirksam sind und sich somit hinsichtlich ihrer Antriebskraft bzw. Antriebsmomente bzw. hinsichtlich ihrer Antriebswege ergänzen. Es kann auf diese Art und Weise bei Einsatz vergleichsweise schwach oder klein dimensionierter Stellantriebe eine Stelleinrichtung mit deutlich verbesserter Wirkcharakteristik erhalten werden.

Es sei darauf hingewiesen, dass selbstverständlich die beiden erfindungsgemäßen Alternativen der parallelen Wirkungsweise mehrerer Stellantriebe und der seriellen Wirkungsweise mehrerer Stellantriebe überlagert werden können. So könnten problemlos bei der Ausgestaltungsform gemäß Fig. 8 an Stelle des einzelnen Stellantriebs 26 zwei oder mehrere Stellantriebe das Segmentzahnrad 14 zur Schwenkbewegung bezüglich des Trageelements 58 antreiben. Ebenso könnten an Stelle des einzelnen Stellantriebs 28 zwei oder mehrere Stellantriebe das Trageelement 58 zur Schwenkbewegung bezüglich der Gehäuseanordnung 12 antreiben. Ebenso ist es selbstverständlich möglich, dass entweder in paralleler oder serieller Anordnungsweise mehr als die zwei dargestellten Stellantriebe wirksam sind.

## Patentansprüche

1. Stelleinrichtung, insbesondere zur Betätigung einer Reibungskupplung, umfassend:
- wenigstens zwei Stellantriebe (26, 28),
- ein Abtriebsglied (16),
- eine Bewegungsumsetzanordnung (14), durch welche eine Antriebskraft der wenigstens zwei Stellantriebe (26, 28) in eine Stellkraft des Abtriebsorgans (16) umsetzbar ist,
- eine Ansteuervorrichtung zur Ansteuerung der wenigstens zwei Stellantriebe (26, 28)
wobei die Ansteuervorrichtung zur Erzeugung einer Stellbewegung des Abtriebsglieds (16) die wenigstens zwei Stellantriebe (26, 28) zur im Wesentlichen gleichzeitigen Erzeugung einer Antriebskraft ansteuert,
**dadurch gekennzeichnet, dass** die Bewegungsumsetzanordnung wenigstens ein Bewegungsumsetzglied (14) aufweist, das um eine Drehachse (A1) drehbar ist und für die wenigstens zwei Stellantriebe (26, 28) Verzahnungsbereiche (38', 38") mit unterschiedlichem Radialabstand zur Drehachse (A1) aufweist, mit welchen Verzahnungsbereichen (38', 38") jeweilige Verzahnungsbereiche (34, 36) der Stellantriebe (26, 28) in Kämmeingriff stehen.

2. Stelleinrichtung, insbesondere zur Betätigung einer Reibungskupplung, umfassend:
- wenigstens zwei Stellantriebe (26, 28),
- ein Abtriebsglied (16),
- eine Bewegungsumsetzanordnung (14), durch welche eine Antriebskraft der wenigstens zwei Stellantriebe (26, 28) in eine Stellkraft des Abtriebsorgans (16) umsetzbar ist,
- eine Ansteuervorrichtung zur Ansteuerung der wenigstens zwei Stellantriebe (26, 28)
wobei die Ansteuervorrichtung zur Erzeugung einer Stellbewegung des Abtriebsglieds (16) die wenigstens zwei Stellantriebe (26, 28) zur im Wesentlichen gleichzeitigen Erzeugung einer Antriebskraft ansteuert
**dadurch gekennzeichnet, dass** ein Bewegungsumsetzglied (14) der Bewegungsumsetzanordnung bezüglich eines Trageelementes (58) der Bewegungsumsetzanordnung bewegbar getragen ist und durch einen ersten (26) der Stellantriebe (26, 28) bezüglich des Trageelementes (58) bewegbar ist und dass durch einen zweiten (28) der Stellantriebe (26, 28) das Trageelement (58) mit dem Bewegungsumsetzglied (14) bewegbar ist.

3. Stelleinrichtung nach Anspruch 2,
**dadurch gekennzeichnet, dass** der erste (26) der Stellantriebe (26, 28) mit dem Bewegungsumsetzglied (14) in Antriebsverbindung steht und an dem Trageelement (58) getragen ist.

4. Stelleinrichtung nach einem der Ansprüche 2 bis 3,
**dadurch gekennzeichnet, dass** das Bewegungsumsetzglied (14) um eine Drehachse (A1) drehbar ist und einen Verzahnungsbereich (38) aufweist, mit welchem ein Verzahnungsbereich (34) des ersten (26) der Stellantriebe (26, 28) in Kämmeingriff steht.

5. Stelleinrichtung nach Anspruch 4
**dadurch gekennzeichnet, dass** das Trageelement (14) um eine Drehachse (A1), vorzugsweise die Drehachse (A1) des Bewegungsumsetzgliedes (14), drehbar ist und einen Verzahnungsbereich (38) aufweist, mit welchem ein Verzahnungsbereich (36) des zweiten (28) der Stellantriebe (26, 28) in Kämmeingriff steht.

## Claims

1. Adjusting device, in particular for actuating a friction clutch, comprising:
- at least two actuators (26, 28),
- a driven element (16),
- a movement converting arrangement (14), by which a driving force of the at least two actuators (26, 28) can be converted into an actuating force of the driven element (16),
- a controller for controlling the at least two actuators (26, 28)
wherein to generate an actuation movement of the driven element (16), the controller controls the at least two actuators (26, 28) for substantially simultaneous generation of a driving force, **characterised in that** the movement converting arrangement comprises at least one movement conversion element (14) which can be rotated about an axis of rotation (A1) and comprises toothed regions (38', 38'') with a different radial spacing from the axis of rotation (A1) for the at least two actuators (26, 28), respective toothed regions (34, 36) of the actuators (26, 28) meshing with said toothed regions (38', 38'').

2. Adjusting device, in particular for actuating a friction clutch, comprising:
- at least two actuators (26, 28),
- a driven element (16),
- a movement converting arrangement (14), by which a driving force of the at least two actuators (26, 28) can be converted into an actuating force of the driven element (16),
- a controller for controlling the at least two actuators (26, 28)
wherein to generate an actuation movement of the driven element (16), the controller controls the at least two actuators (26, 28) for substantially simultaneous generation of a driving force, **characterised in that** a movement conversion element (14) of the movement converting arrangement is movably carried with respect to a carrying element (58) of the movement converting arrangement and can be moved with respect to the carrying element (58) by a first (26) of the actuators (26, 28), and **in that** the carrying element (58) with the movement conversion element (14) can be moved by a second (28) of the actuators (26, 28).

3. Adjusting device according to claim 2, **characterised in that** the first (26) of the actuators (26, 28) is in drive connection with the movement conversion element (14) and is carried on the carrying element (58).

4. Adjusting device according to either of claims 2 to 3, **characterised in that** the movement conversion element (14) can be rotated about an axis of rotation (A1) and comprises a toothed region (38), with which a toothed region (34) of the first (26) of the actuators (26, 28) meshes.

5. Adjusting device according to claim 4, **characterised in that** the carrying element (14) can be rotated about an axis of rotation (A1), preferably the axis of rotation (A1) of the movement conversion element (14) and comprises a toothed region (38) with which a toothed region (36) of the second (28) of the actuators (26, 28) meshes.

## Revendications

1. Dispositif de positionnement, en particulier pour actionner un embrayage à friction, comportant :
- au moins deux mécanismes de positionnement (26, 28),
- un organe mené (16),
- un dispositif de transformation de mouvement (14) par lequel une force d'entraînement des mécanismes de positionnement (26, 28) au nombre de deux au moins peut être transformée en une force de réglage de l'organe mené (16),
- un dispositif de commande pour commander les mécanismes de positionnement (26, 28) au nombre de deux au moins,
dans lequel, pour produire un mouvement de positionnement de l'organe mené (16), le dispositif de commande commande les mécanismes de positionnement (26, 28) au nombre de deux au moins pour produire une force d'entraînement sensiblement simultanément,
**caractérisé en ce que** le dispositif de tranformation de mouvement comporte au moins un élément de transformation de mouvement (14), qui est monté tournant autour d'un axe de rotation (A1) et comporte, pour les mécanismes de positionnement (26, 28) au nombre de deux au moins, des zones de denture (38', 38") possédant des distances radiales différentes par rapport à l'axe de rotation (A1), des zones de denture (34, 36) des mécanismes de positionnement (26, 28) engrenant respectivement avec les précédentes zones de dentures (38', 38").

2. Dispositif de positionnement, en particulier pour actionner un embrayage à friction, comportant :
- au moins deux mécanismes de positionnement (26, 28),
- un organe mené (16),
- un dispositif de transformation de mouvement (14) par lequel une force d'entraînement des mécanismes de positionnement (26, 28) au nombre de deux au moins peut être transformée en une force de positionnement de l'organe mené (16),
- un dispositif de commande pour commander les mécanismes de positionnement (26, 28) au nombre de deux au moins,
dans lequel, pour produire un mouvement de positionnement de l'organe mené (16), le dispositif de commande commande les mécanismes de positionnement (26, 28) au nombre de deux au moins pour produire une force d'entraînement sensiblement simultanément,
**caractérisé en ce qu'un** élément de transformation de mouvement (14) du dispositif de transformation de mouvement est monté déplaçable par rapport à un élément porteur (58) du dispositif de transformation de mouvement, et est déplaçable par rapport à l'élément porteur (58) par un premier (26) des mécanismes de positionnement (26, 28), et **en ce que** l'élément porteur (58) est déplaçable avec l'élément de transformation de mouvement (14) par un deuxième (28) des mécanismes de positionnement (26, 28).

3. Dispositif de positionnement selon la revendication 2,
**caractérisé en ce que** le premier (26) des mécanismes de positionnement (26, 28) est en liaison d'entraînement avec l'élément de transformation de mouvement (14) et est porté par l'élément porteur (58).

4. Dispositif de positionnement selon l'une des revendications 2 ou 3,
**caractérisé en ce que** l'élément de transformation de mouvement (14) peut tourner autour d'un axe de rotation (A1) et présente une zone de denture (38) avec laquelle engrène une zone de denture (34) du premier (26) des mécanismes de positionnement (26, 28).

5. Dispositif de positionnement selon la revendication 4,
**caractérisé en ce que** l'élément porteur (14) peut tourner autour d'un axe de rotation (A1), de préférence l'axe de rotation (A1) de l'élément de transformation de mouvement (14), et présente une zone de denture (38) avec laquelle engrène une zone de denture (36) du deuxième (28) des mécanismes de positionnement (26, 28).
